Europäisches Patentamt

(19) **European Patent Office**

**Office européen des brevets**

(11) Numéro de publication: **0 000 298**
**B1**

(12) **FASCICULE DE BREVET EUROPÉEN**

(45) Date de publication du fascicule du brevet:
08.04.87

(51) Int. Cl.⁴: **C 04 B 40/02,** B 28 B 7/00,
H 05 B 3/60

(21) Numéro de dépôt: **78400007.7**

(22) Date de dépôt: **01.06.78**

(54) **"Procédé économique de chauffage du béton par voie électrique directe et installation le mettant en oeuvre.".**

(30) Priorité: **24.06.77 FR 7719499**
**22.05.78 FR 7815063**

(43) Date de publication de la demande:
**10.01.79 Bulletin 79/1**

(45) Mention de la délivrance du brevet:
**08.04.87 Bulletin 87/15**

(84) Etats contractants désignés:
**BE CH DE FR GB SE**

(56) Documents cité:
**FR-A-2 362 711**
**GB-A-666 583**
**US-A-2 152 365**
**US-A-2 841 856**

**LEA- The Chemistry of Cement and Concrete (1971)**
**p. 395**

(73) Titulaire: **S.R.L. OMNIUM TECHNIQUE D'ETUDES
ET DE PRECONTRAINTE "OTEP", Boîte Postale
39, F-31800 Saint- Gaudens (Haute- Garonne) (FR)**

(72) Inventeur: **Roque, Raymond, 10bis Avenue de
Boulogne, F-31800 Saint- Gaudens (Haute-
Garonne) (FR)**

(74) Mandataire: **Lemoine, Michel, Cabinet Michel
Lemoine 13 Boulevard des Batignolles, F-75008
Paris (FR)**

LIBER, STOCKHOLM 1987

## Description

La présente invention concerne la fabrication d'éléments en béton et plus particulièrement la fabrication d'éléments en béton précontraint. Elle a pour objet:
- d'une part un procédé pour chauffer le béton, par voie électrique, afin d'accélérer son durcissement,
- d'autre part une installation électrique perfectionnée de chauffage mettant en oeuvre ce procédé.

Parmi tous les procédés de chauffage électrique du béton, il en existe deux, assez largement employés, qui sont plus connus sous le nom de chauffage électrique indirect.

- Le premier procédé (FR-A-1 292 998, notamment les trois premiers paragraphes) consiste à incorporer des résistances électriques de chauffage dans le béton frais (ces résistances sont placées dans le moule avant le coulage du béton), puis à faire circuler un courant électrique dans ces résistances de façon à les échauffer et produire au coeur du béton toute la chaleur nécessaire. Ce procédé a l'avantage de minimiser les pertes énergétiques puisque le chauffage a lieu au sein même du béton. Cependant, une fois que le béton est pris, il est impossible d'y retirer les résistances électriques qui, ainsi, sont perdues. L'économie réalisée sur la consommation d'électricité voit alors son intérêt grandement diminué du fait de la nécessité de remplacer les résistances électriques coûteuses à chaque opération de moulage du béton.

Un procédé analogue decrit dans GB-A-666.583 consiste à utiliser les armatures du béton comme résistances électriques. Les armatures sont des résistances de valeurs diverses puisque la résistance d'un élément métallique dépend de sa longueur, de sa section et de la nature du métal. Ce procédé nécessite par conséquent de déterminer précisément le nombre d'armatures à utiliser et la façon dont il faudra les relier (série, parallèle) en fonction de la tension employée. Dans la pratique, il s'avère difficile à mettre en oeuvre car très souvent les armatures sont en contact les unes avec les autres si bien qu'il n est pas toujours évident d'isoler les armatures nécessaires ; la tension utilisée ne convient alors pas forcément avec les possibilités de résistance qu'offrent ces armatures isolées ; de plus la tension convenable peut devenir tout simplement dangereuse pour l'ouvrier de sorte que les précautions de sécurité considérables qui doivent alors être prises grèvent le coût d'exploitation du procédé (équipement de sécurité onéreux, encombrement, etc.).

- Le deuxième procédé consiste à utiliser le béton frais comme résistance électrique. A cet effet, une différence de potentiel est appliquée entre deux électrodes mises en contact avec le béton frais ; le courant électrique qui s'établit ainsi à travers le béton humide échauffe celui-ci par effet Joule. Ce procédé a été mis en oeuvre pour accélérer le durcissement du béton moulé entre deux branches métalliques (fabrication des murs sur chantier par exemple), le procédé consistant à utiliser les branches métalliques comme électrodes (voir US-A 2.152.365). Il ne peut être appliqué que dans le cas où les branches métalliques peuvent être facilement isolées l'une de l'autre. aucune armature en particulier ne doit être en contact électrique avec ces branches. Pour un banc de fabrication de poutres à joues métalliques mobiles, il faudrait isoler chacune des joues du corps du moule, ce qui généralement s'avère irréalisable. En raison de ses inconvénients, ce procédé n'a jamais connu d'industrialisation véritable. Son emploi a toujours été très ponctuel, dans les cas seulement où un autre procédé de chauffage ne pouvait être envisagé.

Dans US.A 2.841.856 est décrit un autre procédé de chauffage direct du béton par effet Joule utilisant des électrodes plantées dans le béton frais et établissant une différence de potentiel entre ces électrodes et la paroi du moule. Cependant la partie intérieure du béton n'est pas exposée au courant électrique et reste donc pratiquement tempérée puisque les électrodes sont placées à une distance de tout au plus 2 pouces de la paroi.

La présente invention a pour objet un procédé de chauffage électrique direct du béton entièrement nouveau, facile à mettre en oeuvre en toutes circonstances et qui permet des économies d'énergie très substantielles par rapport aux autres procédés de chauffage électrique direct existants.

Le procédé selon l'invention utilise également le béton comme résistance électrique. Il s'applique au chauffage de tout élément moulé en béton comportant dans sa masse au moins une armature conductrice de l'électricité qui le traverse dans sa longueur. Ce procédé consiste à:
- isoler électriquement de tout élément autre que le béton au moins une armature conductrice parmi l'ensemble de celles qui traversent le moule dans sa longueur,
- établir directement une différence de potentiel entre chaque armature isolée et un autre élément métallique conducteur en contact avec le béton, de façon à faire circuler un courant électrique entre cet élément et cette armature isolée à travers le béton humide, au moyen d'un générateur de tension;
- et à maintenir ladite différence de potentiel aussi longtemps que le béton ainsi chauffé n'a pas atteint une résistance suffisante pour le démoulage,
ledit procédé étant caractérisé en ce que:
- l'autre élément métallique est constitué par le moule,
- l'on réalise une jonction électrique en plusieurs zones de ladite au moins une armature isolée, chacune de ces zones étant reliée directement à une même borne du générateur,
- l'on répartit lesdites zones de jonction sur la longueur de cette armature isolée de façon à répartir l'intensité du courant dans chacune des dérivations.

Le procédé selon l'invention se distingue principalement des procédés cités ci-dessus par l'utilisation d'au moins une armature en contact avec le béton comme électrode. Il faut remarquer qu'il était déjà connu d'utiliser des armatures comme électrodes dans un tel procédé de chauffage de ciment (voir LEA - The chemistry of cement and concrete (1971) page 395). Cependant dans ce manuel, seul un principe est décrit et non une méthode pour sa mise en oeuvre.

Le courant qui circule entre le coeur du béton (armature isolée) et la paroi du moule, se répartit suivant des lignes de moins grande résistance, c'est-à-dire suivant les lignes de plus grande humidité. Le béton est ainsi chauffé à coeur précisément à l'endroit même où il doit être chauffé (parties les plus humides), d'où un très grand rendement énergétique du procédé. L'expérience semble montrer que la résistance de contact du béton avec l'armature isolée détermine pour l'essentiel l'intensité du courant. Cette résistance (résistance pour une unité de longueur d'armature) dépend directement de la section de l'armature. Or il se trouve qu'avec les armatures habituellement utilisées dans les éléments fabriqués en béton, une différence de potentiel n'excédant pas cinquante volts (domaine des très basses tensions) est suffisante pour porter assez rapidement le béton à une température comprise entre 60 et 70°C, température qui se maintient à ce niveau en régime continu (maintien de la différence de potentiel). Cette très basse tension utilisable confère au procédé une très grande facilité d'emploi en toutes circonstances. Comme l'intensité du courant est dans ces conditions approximativement proportionnelle à la longueur de l'armature, une même tension convient quelle que soit la longueur de l'élément moulé (poutres par exemple) pour un même type d'armature isolée.

Les pertes énergétiques sont légèrement supérieures sans compromettre un rendement qui reste remarquablement intéressant. Le choix du moule comme élément métallique est très avantageux. Les armatures incorporées dans le béton peuvent être en effet en contact électrique avec ce moule, rarement directement mais fréquemment par l'intermédiaire de ligatures métalliques reliant ces armatures au moule afin de les maintenir en place dans le moule avant coulage. L'isolation de plusieurs armatures (au moins deux) apparaît alors problématique et il devient préférable de n'en isoler qu'une en se servant directement du moule comme élément métallique.

Les jonctions électriques d'une armature isolée avec le générateur de tension qui la porte à un potentiel donné, doivent être facilement mise en oeuvre sur chantier c'est-à-dire dans des conditions de propreté et de soin qui interdisent une très grande qualité de jonction. Pour cette raison, le courant électrique ne peut dépasser une certaine intensité au niveau des jonctions (problème de résistance) de contact, (échauffement de jonction).

La répartition des zones de jonction peut faire apparaître que les jonctions électriques d'une armature isolée aux deux extrémités dépassant de l'élément fabriqué en béton ne suffisent pas. Il devient alors nécessaire de réaliser les jonctions au coeur du béton (par exemple, cas des éléments fabriqués en série par extrusion ou filage). Selon une caractéristique de l'invention ces jonctions sont réalisées par soudage ou bridage d'une pièce métallique conductrice, de préférence cuivre, sur l'armature transversalement à cette armature, de façon que cette pièce dépasse du béton après le coulage de ce dernier. La jonction électrique de cette pièce avec le générateur de tension est réalisée vers la partie dépassante. Lorsque le chauffage est arrêté, cette pièce est coupée, avant démoulage, au ras du béton durci.

La tension utilisée est, selon l'une des caractéristiques essentielles de l'invention, comprise entre vingt et cinquante volts ce qui permet son utilisation sans précautions de sécurité particulières. Cette tension est naturellement produite à partir du réseau électrique. Elle est donc de préférence alternative pour simplifier la technique de transformation.

Cette tension peut être multiphasée, par exemple triphasée. Selon une caractéristique subsidiaire de l'invention, le procédé consiste dans ce cas à isoler plusieurs armatures traversant le moule dans toute sa longueur et à répartir chacune des phases du courant sur l'ensemble desdites armatures isolées et sur ledit élément métallique. Cela permet de répartir le courant sur chacune des phases et d'équilibrer approximativement le réseau électrique.

Le procédé selon l'invention est particulièrement utilisable dans le cas de la préfabrication de poutres précontraintes qui sont moulées bout à bout dans un moule longiligne aux extrémités duquel sont tendues les armatures de précontrainte.

Chacune des poutres est séparée de la suivante par deux diaphragmes transversaux au moule qui ménagent un espace à travers lequel passent les armatures de précontrainte et dans lequel aucun béton n'est coule.

Le procédé est caractérisé, dans ce cas particulier, en ce qu'il consiste à isoler électriquement au moins une armature parmi l'ensemble des armatures de précontrainte et réaliser chaque jonction électrique sur chacune des armatures de précontrainte isolées entre deux diaphragmes. On réalise autant de jonctions électriques le long du banc qu'il est nécessaire pour que l'intensité à travers ces jonctions ne dépasse pas la valeur de sécurité.

Mais la présente invention a également pour objet une installation de chauffage électrique du béton mettant en oeuvre le procédé ci-dessus décrit. Cette installation est définie dans la revendication 4 alors qu'un poste d'alimentation classique en courant basse tension comprend:
- une alimentation générale en courant secteur comportant un disjoncteur et sa commande,
- un transformateur de courant dont le primaire est relié à ladite alimentation générale,
- un ensemble de câbles électriques reliés au secondaire dudit transformateur et destinés, dans ce cas, à l'alimentation en courant du béton humide.

L'intensité du courant, circulant dans chacun des câbles électriques alimentant l'ensemble desdites armatures isolées et traversant chacune desdites jonctions électriques de ces câbles avec ces armatures, peut ainsi être controlée à tout instant (détermination de l'origine du défaut éventuel choix de la'répartition des zones de jonction ; lorsque cette intensité dépasse une certaine valeur de sécurité, l'alimentation générale est automatiquement coupée).

Sur ce dernier point l'expérience a d'ailleurs montré qu'il fallait en fait définir deux valeurs de sécurité :
- l'une dont le dépassement dénote un court-circuit manifeste dans l'installation, notamment dans le cas où une armature isolée touche les parois du moule métallique alimenté également en courant (ou se trouve suffisamment proche de ces dernières pour créer un arc électrique) et, -
l'autre dont le simple dépassement peut être considéré comme normal à partir du moment où il ne dure pas dans le temps.

La plupart des surintensités enregistrées ne proviennent en effet aucunement d'un court-circuit véritable ou d'un défaut dans la répartition desdites zones de jonction mais de la résistance particulièrement faible du béton humide en certaines zones. Cette résistance évolue cependant avec le temps en augmentant considérablement de valeur au cours de la rpise du béton et du séchage progressif de ce dernier, si bien que la surintensité qui peut être enregistrée en début de chauffage disparaît généralement après une ou deux heures lorsque le béton a commencé de prendre.

De même, il a pu être constaté que les courts-circuits ne sont presque jamais francs mais qu'il s'agit le plus souvent de défauts d'isolation passagers qui disparaissent naturellement après passage de courant pendant un temps donné. Le passage du courant au niveau du court-circuit crée en effet un arc électrique qui carbonise les armatures et le moule et sèche très rapidement le béton de sorte que la résistance augmentant à ce niveau, il disparaît naturellement pour revenir à un fonctionnement normal.

Il n'est donc pas nécessaire, pratiquement dans tous les cas de surintensité, de recourir à une vérification générale de l'installation de chauffage; les défauts constatés s'estompant naturellement au cours du fonctionnement. Selon une caractéristique de perfectionnement apporté à l'installation électrique décrite ci-dessus, cette dernière comporte alors en sus des relais à maximum d'intensité couplés à un ampèremètre de contrôle, un circuit temporisateur de chauffe relié à la commande de disjoncteur et à l'ensemble de ces relais à maximum d'intensité.

Chacun de ces relais à maximum d'intensité va ainsi émettre deux signaux successifs différents lorsque l'intensité dans le câble d'alimentation de l'armature isolée sur lequel il est branché dépasse une première valeur puis une seconde valeur supérieure à la première (valeurs affichées réglables). Le circuit temporisateur de chauffe, recevant le premier signal, déclenchera la disjonction de l'installation mais également le réarmement automatique du disjoncteur au bout d'un temps donné que l'on pourra préalablement afficher (système de réglage). Le deuxième signal, émis directement vers le disjoncteur, caractérisera un court-circuit franc et provoquera la disjonction définitive de l'installation.

Ainsi les petits défauts dus à la faiblesse locale et passagère de la résistance du béton humide n'entraîneront aucune perturbation gênante dans le fonctionnement de l'installation qui se réenclenchera automatiquement au bout d'un temps donné alors que ces défauts auront très probablement disparu (s'ils n'ont pas disparu, un arrêt momentané supplémentaire de la chauffe sera alors automatiquement délivré).

Dans le but de provoquer la disparition plus rapide de ces défauts, le disjoncteur comporte, selon une autre caractéristique de perfectionnement, un circuit de retard de la disjonction relié au circuit temporisateur de chauffe.

Ainsi, la disjonction momentanée commandée par le circuit temporisateur de chauffe pourra être retardée pendant quelques dizaines de secondes de façon à provoquer, par passage d'une forte intensité, un séchage rapide du béton au niveau des zones de faible résistance et accélérer, par ce biais, l'augmentation de résistance du béton et supprimer le défaut (qui peut disparaître d'ailleurs avant la fin même du temps de retard de la disjonction).

Dans ce but également, selon une autre caractéristique de perfectionnement, la commande de disjoncteur comporte un circuit de marche forcée permettant à l'opérateur de supprimer la disjonction.

L'opérateur pourra ainsi par exemple réenclencher le disjoncteur après toute disjonction due au circuit temporisateur de chauffe, de façon à forcer le passage du courant à travers les zones du béton frais de faible résistance, malgré la surintensité, et accélérer le séchage du béton à ce niveau pour retrouver un régime de fonctionnement normal.

Selon une caractéristique de perfectionnement particulièrement avantageuse de l'invention, un sectionneur est intercalé sur certains câbles électriques d'alimentation de la ou des armatures isolées en aval de la prise de branchement du relais à maximum d'intensité correspondant à ce câble et, un circuit limiteur d'intensité est branché entre les bornes de chacun de ces sectionneurs.

En sectionnant ainsi certains de ces câbles d'alimentation (ouverture des sectionneurs correspondants), l'intensité du courant dans chacun de ces câbles, contraint de passer par les circuits limiteurs d'intensité, se trouve limitée à une valeur préalablement affichée par ces circuits. Quel que soit le défaut pouvant exister au niveau des jonctions électriques ou de l'isolation des armatures, l'installation de chauffage fonctionnera ainsi en régime normal. Les défauts s'estompant généralement au cours du temps, de tels circuits limiteurs d'intensité n'agissent qu'à titre de sécurité en début de chauffage. Dans le cas où un défaut subsisterait tout au cours du chauffage, ce dernier ne serait pas pour autant perturbé puisqu'un court-circuit franc n'aurait pour effet que de provoquer un échauffement de l'armature non correctement isolée et, par conséquent, également le chauffage du béton.

Selon une caractéristique préférentielle, chaque circuit limiteur d'intensité est formé d'un "triac" muni d'une plaquette électronique de pilotage reliée au relais à maximum d'intensité branché en aval du sectionneur correspondant au circuit limiteur.

Dans cette forme de réalisation préférentielle, chaque relais à maximum d'intensité a ainsi également pour fonction de commander un hâchage plus ou moins important du courant traversant le "triac" suivant l'intensité qu'il peut détecter, hâchage qui a pour effet de diminuer plus ou moins l'intensité en aval du "triac".

Selon d'autres caractéristiques avantageuses de l'invention, une horloge et un enregistreur-transmetteur de température sont de préférence reliés à la commande de disjoncteur.

Une fois l'installation mise en route, le chauffage du béton peut ainsi se poursuivre automatiquement jusqu'à durcissement complet (l'horloge commande l'arrêt au bout d'un temps programmé), sans jamais dépasser une température admissible choisie (l'enregistreur transmetteur commande une interruption de chauffage lorsque la température du béton devient excessive).

La présente invention ayant maintenant été exposée sous sa forme générale, elle sera mieux comprise à la lecture de la description qui suit en regard des dessins annexés, le lesquels, dessins et description ne sont donnés qu'à titre d'exemple non limitatif.

Sur ces dessins :
- la figure 1 représente le schéma électrique d'une installation de chauffage du béton selon l'invention:
- la figure 2 illustre schématiquement le principe de répartition des jonctions électriques sur l'armature isolée et sur l'élément métallique ;
- la figure 3 montre comment répartir les phases d'une tension multiphasée entre les armatures isolées et le moule;
- la figure 4 représente en perspective un banc de préfabrication de poutres précontraintes équipées d'une installation de chauffage selon l'invention ;
- la figure 5 est un détail d'une jonction électrique sur une armature isolée de précontrainte de ce banc ;
- la figure 6 est un détail montrant l'isolation d'une armature isolée de précontrainte;
- la figure 7 représente les graphiques de consommation d'électricité en fonction du temps pour deux cas d'alimentation (courant entre armature et moule et courant entre deux armatures);
- la figure 8 montre certains perfectionnements qui peuvent être apportés au schéma de la figure 1.

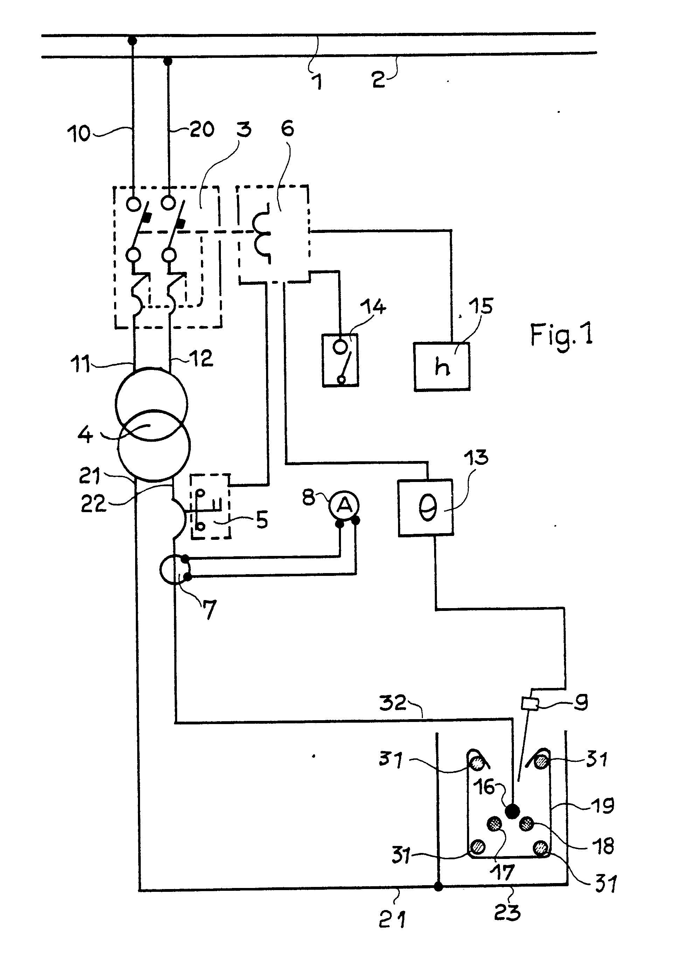

Sur la figure 1 on peut voir l'alimentation du réseau électrique général ou secteur constituée de deux câbles d'alimentation 1 et 2. Une prise de courant 10, 20 est reliée à l'entrée d'un disjoncteur 3. La sortie du disjoncteur 11, 12 alimente l'enroulement primaire d'un transformateur 4 dont le secondaire 21, 22 délivre une tension électrique aux câbles 21 (même référence que le secondaire) et 32 reliant respectivement le moule 23 et une armature 16 d'un élément en béton coulé.

Cet élément est vu en coupe. Il comprend un cadre de ferraillage classique constitué de quatre armatures 31 reliées entre elles par des armatures transversales en U 19, ce cadre étant destiné à reprendre les efforts tranchants. Au centre de cet élément on trouve trois armatures 16, 17, 18 traversant le moule 23 dans toute sa longueur. Il peut s'agir par exemple d'une poutre précontrainte dont les trois armatures 16, 17, 18 sont précisément les armatures de précontrainte. Le moule 23 est métalliqué et l'armature 16 a été isolée électriquement du moule 23.

Entre la sortie 22 du secondaire du transformateur 4 et le câble d'alimentation 32 de l'armature isolée 16, est intercalé en série un relais à maximum d'intensité 5 relié à la commande de disjoncteur 6. Immédiatement en aval de ce relais est branché en 7 un ampèremètre de controle et de sécurité 8 permettant do controler l'intensité circulant dans ce cable d'alimentation 32.

Une sonde de température 9 constituée par exemple d'un thermo-couple mesure la température au sein du béton en cours de prise dans le moule 23. Cette sonde 9 est reliée à un enregistreur-transmetteur de température 13 lui-même relié à la commande de disjoncteur 6.

Une horloge de commande 15 est également reliée à la commande de disjoncteur 6.

Le disjoncteur 3 comporte en outre une commande manuelle 14 qui permet à l'opérateur d'actionner le disjoncteur manuellement par l'intermédiaire de sa commande 6.

Le fonctionnement de l'installation ainsi décrite est le suivant :

La différence de potentiel créée entre l'armature isolée 16 et le moule métallique 23 provoque la circulation d'un courant à travers le béton frais en cours de prise dans 30 le moule 23, ce courant échauffant par effet Joule le béton qui sert de résistance électrique.

La jonction électrique du câble d'alimentation 32 avec l'armature isolée 16 offre généralement une résistance de contact élevée qui limite l'intensité du courant pouvant passer dans le câble d'alimentation 32 (cette jonction, mise en oeuvre sur chantier, ne peut être réalisée qu'avec des moyens très simples et dans des conditions de propreté précaires). Une valeur de sécurité est ainsi définie et enregistrée dans le relais à maximum d'intensité 5. Lorsque le courant circulant dans le câble 32 dépasse cette valeur, le relais 5 commande le disjoncteur 3 par l'intermédiaire de sa commande 6, qui coupe le courant. L'ampèremètre de contrôle et de sécurité 8 permet à l'opérateur de contrôler à tout instant cette intensité.

La sonde de température 9 permet de mesurer la température au sein de l'élément moulé en béton. L'enregistreur-transmetteur de température 13 émet un signal de commande lorsque cette température dépasse une valeur préalablement affichée. Ce signal de commande coupe alors le disjoncteur 3 par l'intermédiaire de la commande 6. Généralement, la valeur limite à ne pas dépasser au sein du béton est de l'ordre de 75°. Lorsque la température est redescendue en-dessous de la valeur affichée, ou d'une autre valeur choisie, l'enregistreur 13 réenclenche le disjoncteur 3 par l'intermédiaire de sa commande 6 ; la différence de potentiel entre l'armature isolée 16 et le moule 23 est ainsi rétablie ; le chauffage se béton se poursuit.

L'horloge de commande 15 permet de faire fonctionner l'installation de chauffage pendant un laps de temps prédéterminé. Si l'expérience montre, par exemple, qu'au bout de cinq heures de chauffage, l'élément béton peut être démoulé, cette horloge 15 sera préférentiellement réglée sur cinq heures, c'est-à-dire qu'elle coupera l'alimentation de l'installation après cinq heures de fonctionnement en déclenchant le disjoncteur 3 par l'intermédiaire de la commande 6.

Sur la figure 1, une seule armature 16 a été isolée.

Il est possible d'isoler également une autre armature 17 et de brancher l'alimentation 21 à cette armature. Cependant, l'expérience pratique montre qu'il est difficile d'isoler plusieurs armatures, beaucoup se trouvant généralement reliées ensemble et en contact avec le moule. Pour cette raison, l'alimentation directe du moule est souvent plus simple.

L'élément moulé en béton peut être suffisamment long de telle sorte que l'intensité circulant dans la jonction électrique du câble d'alimentation 32 avec l'armature isolée 16 soit trop importante. Il est nécessaire alors d'alimenter cette armature 16 en plusieurs zones distinctes réparties sur sa longueur, chacune des zones étant reliée directement au secondaire 22 du transformateur 9 par une dérivation de courant. Sur chacune de ces dérivations se trouve un relais à maximum d'intensité 5 relié à la commande de disjoncteur 6, chacun de ces relais pouvant commander indépendamment la disjonction de l'installation.

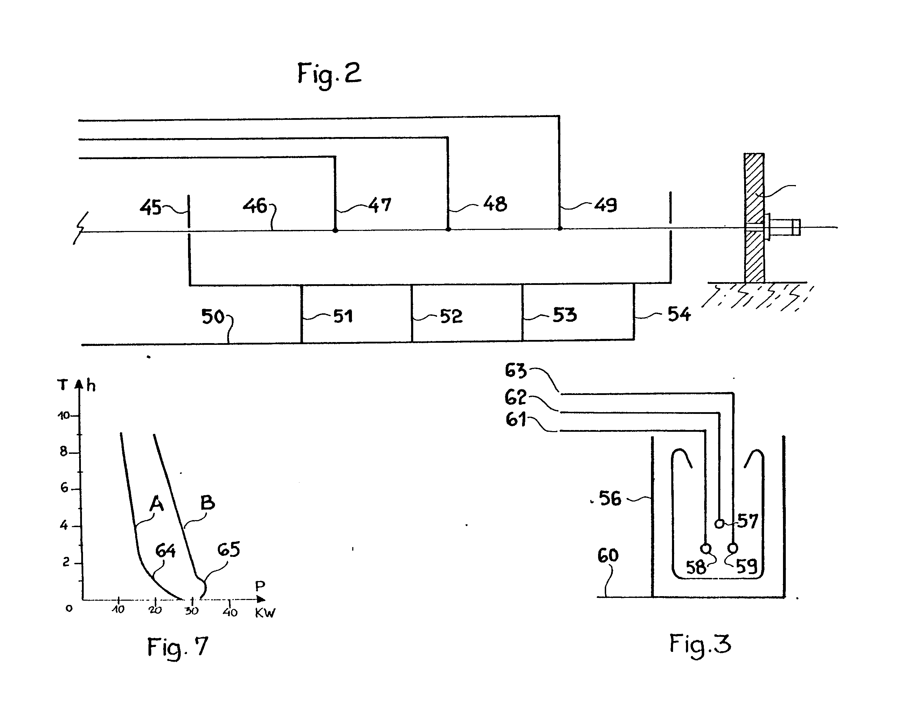

L'illustration de la répartition de ces zones de jonction sur l'armature isolée a été représentée sur la figure 2. Sur cette figure, trois câbles d'alimentation 47, 48 et 49 sont reliés à l'armature isolée 46 en trois zones de jonction distinctes. Le moule métallique 45 est relié à son câble d'alimentation 50 par quatre conducteurs 51, 52, 53 et 54 permettant d'éviter les chutes de tension dans ce moule.

Le nombre de jonctions sur l'armature isolée et sur le moule métallique n'est naturellement nullement limitatif. Il est à déterminer dans chaque cas pratique de réalisation. Il est par contre important que chacun des câbles d'alimentation 47, 48, 49 de l'armature isolée 46 soit relié directement au secondaire du transformateur, de telle sorte que l'intensité qui circule dans chacun de ces câbles puisse être contrôlée à tout instant.

L'expérience a montré que le courant circulant dans une jonction du type de celle décrite figure 2 ne pouvait pas dépasser 320 ampères pour une section d armature approximativement cylindrique de treize millimètres de diamètre (banc de poutres précontraintes 50 cm x 50 cm, armature isolée : armature de précontrainte, section de l'armature isolée environ un centimètre carré). Par mesure de sécurité, l'intensité du courant dans chacune de ces jonctions est limitée vers 280 ampères. Pour un tel banc, on a pu constater qu'une tension de 45 volts permettait l'élévation du béton à la température de 65°C en trois ou quatre heures environ, la température se stabilisant ensuite à ce niveau en alimentation continue (maintien de la tension à 48 volts). Des résultats identiques ont pu être obtenus avec une armature isolée de même section pour d'autres formes et dimensions de l'élément moulé en béton. Il semble que la tension optimum à appliquer, c'est-àdire la tension permettant de chauffer le béton à une température qui ne soit ni trop élevée ni trop basse et de la maintenir à cette température en régime continu d'alimentation, dépende essentiellement de la section de l'armature isolée. Le demandeur n'a pas pu expliquer complètement les phénomènes physiques intervenant dans ce procédé de chauffage ; il pense néanmoins que la résistance de contact du béton avec l'armature isolée conditionne essentiellement le passage de l'électricité à travers le béton, ce qui expliquerait le rôle joué par la section de cette armature. Dans la pratique, il s'avère qu'une très basse tension est toujours utilisable. Le choix de cette tension dépend de la température que l'on veut obtenir au sein du béton et par conséquent de la section de l'armature isolée.

La tension utilisée est alternative et peut être également multiphasée. Plusieurs modes de branchement sont alors possibles : on peut, soit répartir les phases sur plusieurs moules (par exemple, pour un courant triphasé, alimenter simultanément trois moules métalliques en reliant chacun des moules au neutre de l'alimentation et une armature isolée par moule à une phase de l'alimentation), soit en répartissant les différentes phases sur plusieurs armatures préalablement isolées et/ou le moule, comme un exemple en est donné à la figure 3.

Sur cette figure 3 : un élément en béton précontraint est moulé dans un moule métallique 56 ; trois armatures de précontrainte 57, 58, 59 ont été préalablement isolées électriquement de tout élément autre que le béton ; le neutre 60 et les trois phases 61, 62, 63 d'une alimentation triphasée à quatre fils ont été reliés respectivement au moule métallique 56 et aux trois armatures de précontrainte isolées 58, 57, 59. Cette forme de réalisation n'est, naturellement, nullement limitative ; on peut tout aussi bien répartir autrement les trois phases et le neutre entre les armatures isolées et le moule sans sortir du cadre de l'invention.

Le choix du schéma d'alimentation dépend en fait de la facilité avec laquelle il est possible d'isoler les armatures et du bon équilibrage du courant dans les différentes phases. Comme l'expérience montre cependant qu'il est difficile d'isoler simultanément plusieurs armatures et que, en tout cas, l'équilibrage d'une installation multiphasée précédemment décrite donne rarement satisfaction, une alimentation conforme au schéma de la figure 1 est souvent préférable ; il suffit simplement de répartir les courants circulant dans chacune des phases sur plusieurs moules comme indiqué ci-dessus.

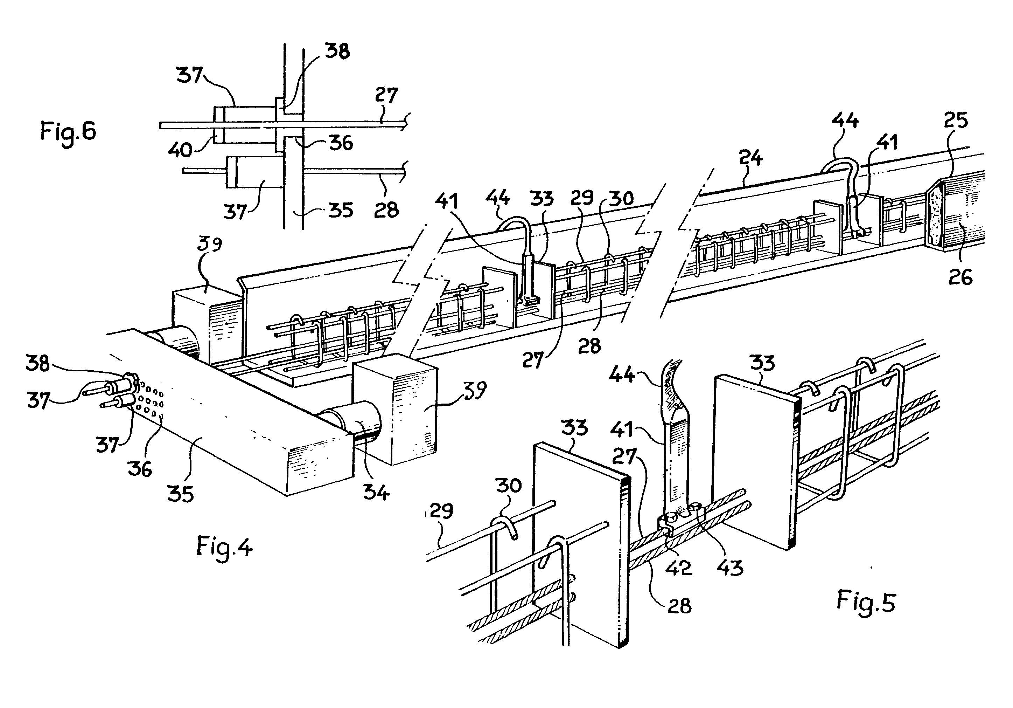

La figure 4 représente un banc de préfabrication de poutres précontraintes dans lequel plusieurs poutres sont moulées simultanément bout à bout. Aux extrémités du banc sont tendues les armatures de précontrainte 27 et 28. Sur la figure, vers la gauche, on peut voir le système de tension des armatures qui comprend deux butées 39 sur lesquelles prennent appui deux vérins 34. Ces vérins sont agencés pour repousser une pièce de retenue 35 percée de trous 36 à travers lesquels passent les armatures de précontrainte. Chacune de ces dernières est bloquée immédiatement derrière un trou de passage 36 par un système de blocage 37. L'armature supérieure 27 est isolée du système de tension par un moyen dont le détail est vu figure 6 et qui comprend notamment la bague d'isolation 38 vue en perspective à la figure 4.

Les armatures de précontrainte 27 et 28 traversent les guide-fils 33 séparateurs de poutres, chacun des guide-fils 33 formant un diaphragme transversal au moule, deux guide-fils 33 consecutifs et rapprochés ménageant un espace dans lequel aucun béton n'est coulé. Ces guide-fils sont conçus pour qu'ils n'établissent pas de contact électrique ni entre les armatures, ni entre les armatures et moule ; ils sont réalisés par exemple dans une matière isolante électrique comme le bois, les résines synthétiques, etc.

Chaque poutre possède en sus des deux armatures de précontrainte un cadre de ferraillage constitué de quatre armatures 29 qu'entourent des armatures métalliques transversales en forme de U 30.

Le moule métallique possède deux joues latérales 24 et 25 isolées par une matière isolante thermique 26.

L'ensemble du moule ne sera pas davantage décrit comme étant bien classique. Sur cette figure 4 on peut voir entre deux guide-fils 33 une jonction électrique avec l'armature de précontrainte supérieure 27, cette jonction étant constituée d'un câble d'amenée du courant 44 soudé à un dispositif 41 serré autour de l'armature de précontrainte comme indiqué en détail figure 5.

Ce système de fixation 41 comporte un té (référencé aussi 41) bridé autour de l'armature 27 par une bride 42 serrée contre le té par boulons filetés 43.

Cette jonction électrique robuste et simple est particulièrement aisée à mettre en ouvre sur chantier. On comprendra néanmoins facilement qu'étant donné les conditions de propreté régnant sur les chantiers (boue, poussière de béton, etc.), une telle jonction possède une résistance de contact élevée qui limite l'intensité dans chacun des câbles d'alimentation 44 (échauffement de la jonction). Tout système de jonction peut naturellement être employé sans sortir du cadre de l'invention.

Sur la figure 4 on peut voir un câble d'alimentation de l'armature de précontrainte supérieure 27 à chaque intervalle entre deux guide-fils. Si les poutres ne sont pas très longues on pourra se contenter de disposer une jonction électrique tous les deux intervalles par exemple. On peut également réaliser une jonction éiectrique sur cette armature 27 en extrémité du banc, entre le moule et le système de retenue 37 de l'armature 27, sans sortir du cadre de l'invention. L'expérience montre que pour des armatures de précontrainte de section d'un centimètre carré environ, il est nécessaire de réaliser la jonction électrique de chaque armature de précontrainte isolée au générateur de tension tous les vingt mètres environ.

La jonction électrique du moule métallique au générateur de tension conformément au schéma de la figure 2 n'a pas été représentée sur cette figure 4. De même l'ensemble d'alimentation (générateur de tension, disjoncteur...) avec tous les câblages, en particulier la convergence de tous les câbles d'alimentation 44 vers le secondaire du transformateur conformément au schéma de la figure 1, n'a pas été représenté. Tout homme de métier pourra néanmoins en concevoir la réalisation pratique sans aucune difficulté.

La figure 6 montre le détail de l'isolation de l'armature de précontrainte 27 sur la pièce de retenue 35. Cette armature 27 passe à travers un orifice 36 percé dans la pièce de retenue 35.

Une bague spéciale 38 isolante désolidarise électriquement l'armature 27 de la pièce de retenue 35 et par conséquent de tout son entourage (comme l'armature 28 par exemple). Cette bague 38 a un double rôle : d'une part, isoler électriquement l'armature 27, d'autre part, répartir continûment l'effort de l'élément de blocage 37 (de cet élément connu en soi on ne peut voir sur la figure que l'écrou de blocage 40 qui agit sur un système à mâchoires serrant l'armature 27) de cette armature sur la pièce de retenue 35.

Cette bague 38 pourra être avantageusement réalisée en acier enveloppé sur toute sa surface extérieure de résine appelée couramment dans le commerce "résine époxy" très résistante (à un effort) et isolante (électrique).

Cette bague 38, comportant un orifice cylindrique à travers lequel passe l'armature 27, est constituée d'un cylindre -coaxial à cet orifice cylindrique- destiné à pénétrer dans l'orifice 36 et, d'une partie s'appuyant sur la pièce de retenue 35 ; la forme extérieure de cette dernière partie se moule suivant le contour des éléments situés à proximité d'elle (par exemple l'élément de blocage 37 de l'armature inférieure 28). Sur la figure 6 on peut voir également l'autre armature de précontrainte 28 qui n'a pas été isolée avec son système de blocage 37 appliqué directement contre la pièce de retenue 35.

La figure 4 illustre en particulier la difficulté qui peut exister à isoler plusieurs armatures d'un même élément moulé en béton. En effet, l'armature de précontrainte inférieure 28 se trouve de façon classique reliée par des ligatures métalliques 30 au cadre de ferraillage 29 de chaque poutre pour maintenir ce cadre en position au moment du coulage du béton ; ce cadre métallique étant bien souvent lui-même relié au moule dans le même but. On comprend, dans ces conditions, que l'isolation d'une seule armature est beaucoup plus simple à mettre en oeuvre et que, par conséquent, un schéma de branchement du type de celui décrit figure 1 est préférable.

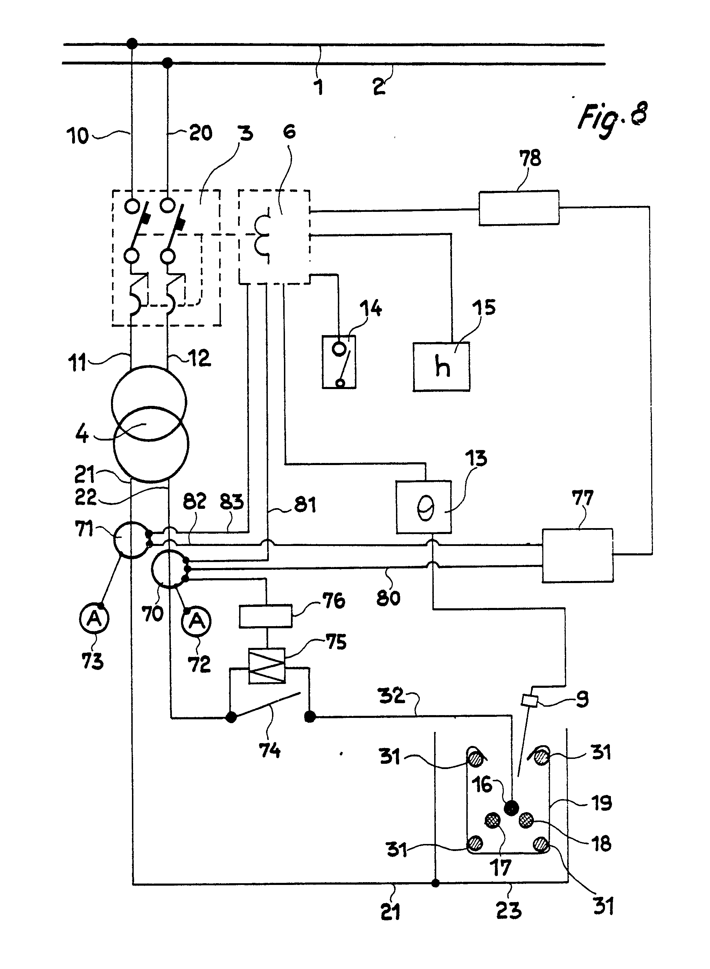

Il est possible cependant d'isoler plusieurs armatures de précontrainte, en les désolidarisant complètement du cadre métallique de chaque poutre (caler ce cadre sans toucher les armatures - emploi de cales isolantes) et, notamment deux armatures de précontrainte. Une différence de potentiel établie en réalisant les jonctions électriques décrites ci-dessus sur chacune de ces deux armatures permet d'accroître légèrement le rendement de l'installation de chauffage comme l'indique la courbe de consommation d'énergie électrique par rapport au temps de la figure 7.

Sur cette figure 7 en effet, on constate que pour une différence de potentiel appliquée entre deux armatures isolées (courbe A, une méthode non comprise dans l'invention), la consommation d'énergie électrique est à tout instant inférieure à celle constatée pour une différence de potentiel appliquée entre une armature et le moule (courbe B). Les températures du béton étaient, dans les deux cas, voisines. Cela peut s'expliquer par le fait que les lignes de courant empruntent les lignes de plus grande humidité du béton entre les électrodes et suivant le chemin le plus court. De ce fait, le chauffage a lieu plus à coeur dans le premier cas (courbe A) que dans le second (courbe B). Ces courbes (A et B) peuvent en outre s'analyser à peu près comme suit : la première section (64 pour la courbe A et 65 pour la courbe B) correspond à la prise du béton autour de l'armature isolée. Les phénomènes qui se produisent sont complexes, la courbe n'a pas de forme bien déterminée. La seconde section, à peu près linéaire et décroissante, montre l'augmentation progressive de la résistance du béton qui sèche en durcissant (augmentation de la longueur des lignes de plus grande humidité et diminution de cette humidité). Au bout de quelques heures, le courant a fortement diminué, d'où une auto-régulation naturelle de ce procédé de chauffage.

La figure 8 complète le schéma représenté à la figure 1 afin d'illustrer certains perfectionnements qui peuvent être apportés à l'installation de chauffage précédemment décrite.

Tous les éléments communs entre la figure 8 et la figure 1 portent ainsi les mêmes références. Leur fonction étant par ailleurs identique entre ces deux figures, tout ce qui a été décrit à leur sujet précédemment ne sera pas ciaprès repris.

Par rapport à la figure 1, le relais à maximum d'intensité 5, l'ampèremètre de contrôle et de sécurité 8, et la jonction 7 de cet ampèremètre avec le câble d'alimentation 32 de l'armature isolée 16 ont été symbolisés plus simplement sur la figure 8 en 70 et 72 (d'un point ds vue pratique en effet, la jonction 7 de l'ampèremètre de contrôle et de sécurité 8 avec le câble 32 se trouve située sur le relais à maximum d'intensité 5, d'où la simplification du schéma consistant à représenter l'ensemble de ces deux éléments, jonction et relais, par une seule référence 70 sur la figure 8 qui se trouve ainsi relié, d'une part, à la commande de disjoncteur 6, d'autre part, à l'ampèremètre 72 -initialement 8- ; cette dernière liaison n'étant représentée que par un seul fil conformément à l'usage dans un organigramme de fonctionnement).

Sur ce relais à maximum d'intensité 70 on peut afficher deux valeurs d'intensité dont la seconde est supérieure à la première.

Lorsque l'intensité dans le câble d'alimentation 32 atteint la première valeur, un signal est émis vers le circuit temporisateur de chauffe 77 par l'intermédiaire de la liaison 80.

Lorsque l'intensité atteint la seconde valeur, un autre signal est émis vers la commande de disjoncteur 6 par l'intermédiaire de la liaison 81.

Le circuit temporisateir de chauffe 77 se trouve lui-même relié à la commande de disjoncteur 6 par l'intermédiaire d'un circuit de retard de disjonction 78 qui, généralement, est intégré à la commande de disjoncteur.

Symétriquement au relais à maximum d'intensité 70 mesurant l'intensité du courant circulant dans le câble électrique d'alimentation 32 et émettant des signaux lorsque cette intensité dépasse certaines valeurs, un relais à maximum d'intensité 71 est mis en place sur le câble d'alimentation 21 du moule métallique 23.

Sur ce dernier relais 71, on a branché également un ampèremètre de controle et de sécurité 73 (symétrique à l'ampèremètre 72) permettant de contrôler en permanence l'intensité circulant dans le câble d'alimentation 21.

Ce relais à maximum d'intensité 71 émet également un signal lorsque l'intensité atteint successivement une première valeur et une seconde valeur (valeurs affichées réglables). Lorsque l'intensité atteint la première valeur, le signal correspondant est émis en direction du temporisateur de chauffe 77 par l'intermédiaire de la liaison 82 ; tandis que lorsqu'elle atteint la seconde valeur, le signal correspondant est émis en direction de la commande de disjoncteur 6 par l'intermédiaire de la liaison 83.

La commande de disjoncteur 6 comporte par ailleurs un circuit de marche forcée (non représenté) permettant à l'utilisateur de maintenir l'alimentation générale de l'installation malgré les différents ordres de coupures pouvant parvenir à cette commande.

Le fonctionnement de l'installation perfectionnée (figure 8) qui vient d'être décrite se comprendra à présent facilement :

Lesdites première et deuxième valeurs d'intensité pour lesquelles le relais à maximum d'intensité 70 émet un signal, respectivement, vers le temporisateur de chauffe 77 et vers la commande du disjoncteur 6, correspondent, respectivement, à l'intensité maximale admissible en régime permanent du courant à travers la jonction du câble électrique 32 à l'armature isolée 16 et au seuil d'intensité caractéristique d'un court-circuit franc.

Comme une valeur d intensité dans le câble éiectrique 32 comprise entre les deux dites première et seconde valeurs ne caractérise aucun court-circuit franc mais simplement une surintensité passagère qui ne peut aller qu'en diminuant au cours du temps, celle-ci ne déclenchera la disjonction de l'installation que par l'intermédiaire du temporisateur de chauffe 77 ; temporisateur qui réarmera le disjoncteur au bout d'un temps préalablement affiché et réglable ; ce temps correspondant à celui probable au-delà duquel la surintensité risque de s'être suffisamment atténuée.

Le circuit de retard de disjonction 78 a pour objet de retarder la disjonction de l'installation commandée par le circuit temporisateur de chauffe 77, de façon à maintenir la surintensité circulant dans le câble électrique 32 pendant quelques secondes, sans aucun danger ; pendant ce court intervalle de temps, la chauffe du béton -donc son durcissement-accélérée dans la ou les zones de moindre résistance, favorise l'augmentation rapide de cette résistance et le retour consécutif à un régime d'intensité normal.

Ce circuit de retard de chauffe pourrait naturellement être supprimé sans sortir du cadre de l'invention. Le circuit de marche forcée que comporte le disjoncteur peut par exemple assurer manuellement la fonction de ce circuit de retard lorsque l'on a noté que l'installation est en régime de disjonction temporisée.

Lorsque l'intensité dans le câble électrique 32 dépasse ladite seconde valeur ou valeur de court-circuit, il y a là un défaut manifeste et une sonnerie peut par exemple s'enclencher automatiquement, Un essai de marche forcée permet alors de localiser, sur chacun des ampèremètres de contrôle et de sécurité 72 branchés sur chacun des câbles électriques 32, lequel des câbles électriques 32 de l'alimentation de l'armature isolée 16 est en court-circuit et donc, de détecter l'origine du défaut pour la supprimer (ce paragraphe s'applique en particulier naturellement au cas où l'armature isolée 16 est reliée par plusieurs cables électriques 32 conformément à la figure 2).

Lesdites première et seconde valeurs, pour lesquelles le relais à maximum d'intensité 71 émet un signal en direction respectivement, du circuit temporisateur de chauffe 77 et de la commande du disjoncteur 6 au moyen, respectivement, des liaisons 82 et 83, correspondent, respectivement, à l'intensité, maximale admissible pour la capacité du transformateur 4 en régime permanent et à l'intensité de court-circuit franc.

Ainsi, l'intensité, circulant dans le câble électrique 21 assurant le retour du courant du moule métallique 23 au transformateur 4, est égale à la somme des intensités circulant dans les câbles électriques 32 (cf. paragraphe précédent dans le cas de plusieurs câbles 32). Il peut alors arriver que la somme des intensités circulant dans chacun des câbles électriques 32 dépasse la valeur maximale admissible par le transformateur, sans pour autant que la valeur limite admissible dans chacun de ces câbles soit dépassée. Le circuit temporisateur de chauffe 77 commandera alors une disjonction momentanée, analogue à celle commandée par l'intermédiaire des relais à maximum d'intensité 70, aussi longtemps que la surintensité dans le câble 21 subsistera (l'intensité dans le câble 21 diminue au fur et à mesure que le béton durcit et augmente de résistance). Ce cas est toutefois assez rare, sa fréquence dépendant étroitement des caractéristiques du transformateur employé 4.

L'intensité de court-circuit détectée par le relais à maximum d'intensité 71 peut provenir d'un défaut dans le branchement du câble 21. Ce relais 71 assure donc une sécurité supplémentaire en provoquant la disjonction de l'installation parallèlement à celle commandée par l'un des relais à maximum d'intensité 70.

Sur le schéma de la figure 8 on peut apercevoir en aval du relais à maximum d'intensité 70, sur le câble électrique 32, un sectionneur 74 aux bornes duquel est branché un circuit limiteur de tension 75.

Ce circuit limiteur de tension 75 sera, selon une technique actuelle courante, un circuit hâcheur de courant dit "triac" (cas d'une alimentation en courant alternatif) commandé par une plaquette électronique de pilotage 76 reliée au relais à maximum d'intensité 70. Cette plaquette 76 commande un hâchage plus ou moins important du courant en fonction de l'intensité détectée dans le relais à maximum d'intensité 70. L'alimentation en courant alternatif de cette plaquette, bien classique, n'a pas été représentée sur le schéma.

L'utilisateur a ainsi la possibilité, en sectionnant le circuit (position du sectionneur 74 ouverte comme indiqué sur le schéma), de faire passer le courant circulant dans le câble 32 à travers le circuit limiteur de tension 75 qui limite ainsi ce courant. Quel que soit le défaut pouvant apparaître dans l'installation (zone de faible résistance du béton ou court-circuit), le chauffage se déroulera ainsi normalement ; le détecteur enregistreur de température 13 commandant seul la disjonction ou le réarmement du disjoncteur au gré des fluctuations de températures de l'élément en béton chauffé.

Bien que le circuit temporisateur de chauffe 77 ne semble plus avoir d'intérêt dans ce cas, il est préférable de le laisser en place car il assure une double sécurité. En effet, au cas où l'un des circuits limiteurs de tension viendrait à tomber en panne, il reprendrait son rôle habituel. L'installation électrique qui vient d'être décrite peut ainsi fonctionner suivant deux régimes de sécurité différents, l'un de ces régimes continuant à assurer la sécurité de l'installation de chauffage en cas de défaillance de l'autre.

Il est clair cependant qu'une installation ne comportant qu'une seule des deux sécurités précédentes (disjonction temporisée ou circuit limiteur de tension) fait partie de l'invention.

De même, le présent schema de perfectionnement (figure 8), comportant, par câble d'alimentation 32, un relais à maximum d'intensité 70 relié au temporisateur de chauffe 77 (liaison 80) et un circuit limiteur de tension 75, peut naturellement se concevoir, sans sortir du cadre de l'invention, avec, pour plusieurs câbles d'alimentation 32, une seule liaison 80 et un seul circuit limiteur de tension 75. L'expérience montre en effet que lorsqu'une surintensité est détectée, cette dernière se produit toujours dans un seul des câbles d'alimentation 32 ; de telle sorte que la disjonction temporisée de l'ensemble de l'installation à partir des mesures de l'intensité dans ce seul câble, ou la limitation d'intensité dans ce seul câble, suffit à assurer la sécurité de l'ensemble de l'installation. On peut donc réaliser facilement une installation semi-automatique dans laquelle l'opérateur, après un contrôle rapide, au moyen des ampèremètres de contrôle et de sécurité 72, des différentes intensités circulant dans les différents câbles 32 (marche forcée de l'installation), sélectionnerait, au moyen d'un contacteur tournant, le câble d'alimentation 32 sur lequel la disjonction temporisée et la limitation de courant seraient mises en service.

## Revendications

1. Procédé pour chauffer un élément en béton en cours deprise dans un moule par effet Joule en faisant circuler un courant électrique alternatif dans sa masse en vue d'accélérer son durcissement, ledit béton comportant dans sa masse au moins une armature allongée traversant le moule dans sa longueur, ledit procédé destiné à chauffer le bé ton, consistant:

- à isoler électriquement de tout élément autre que le béton au moins une armature,
- à établir directement une différence de potentiel entre chaque armature isolée et un autre élément métallique conducteur en contact avec le béton de façon à faire circuler un courant électrique entre cet élément et cette armature isolée, à travers le béton humide ou moyen d'un générateur de tension,
- et à maintenir ladite différence de potentiel aussi longtemps que le béton ainsi chauffé n'a pas atteint une résistance suffisante pour le démoulage,

ledit procédé étant caractérisé en ce que :
- l'autre élément métallique est constitué par le moule;
- l'on réalise une jonction électrique en plusieurs zones de ladite au moins une armature isolée, chacune de ces zones étant reliée directement à une même borne du générateur ; et
- l'on répartit lesdites zones de jonction sur la longueur de cette armature isolée de façon à répartir l'intensité du courant dans chacune des dérivations.

2. Procédé selon la revendication 1, caractérisé en ce que :
- l'on dispose avant moulage en chacune de certaines au moins des zones de jonctions électriques, une pièce metallique conductrice transversalement à l'armature correspondante de telle sorte que chacune de ces pièces dépasse du béton après moulage ;
- l'on réalise la jonction électrique de chacune de ces pièces
. d'une part, avec l'armature correspondante
. et, d'autre part, vers l'extrémité dépassant du béton, avec la borne correspondante du générateur de tension ;
- et enfin, l'on sectionne cette pièce au ras du béton au moment du démoulage.

3. Procédé selon l'une des revendications 1 et 2, ledit procédé étant appliqué
- à la réalisation bout à bout d'éléments oblongs en béton moulé traversés longitudinalement par, au moins, une armature à un banc de fabrication de poutres précontraintes comportant un moule métallique longiligne aux extrémités et le long duquel est tendu l'ensemble des armatures de précontrainte et dans lequel sont moulées simultanément plusieurs poutres bout à bout, l'intervalle entre deux poutres juxtaposées étant ménagé par deux diaphragmes transversaux au moule, que traverse l'ensemble des armatures de précontrainte et entre lesquels aucun béton n'est coulé,

ledit procédé étant caractérisé en ce que :

- l'on isole électriquement au moins une armature parmi l'ensemble des armatures de précontrainte ;

- l'on dispose chaque jonction électrique dans chacune des zones isolées entre deux dits diaphragmes, l'intervalle entre deux diaphragmes dans lequel on réalise la jonction constituant ainsi une dite zone de jonction ;

- et l'on évacue du moule cette jonction transversalement aux armatures.

4. Installation de chauffage électrique du béton en cours de prise dans un moule, pour mettre en oeuvre le procédé d'une des revendications 1 à 3, cette installation comprenant :

- une alimentation générale en courant secteur comportant un disjoncteur et sa commande,

- un transformateur de courant dont le primaire est relié à ladite alimentation générale,

- un ensemble de câbles électriques reliés au secondaire dudit transformateur et destinés à l'alimentation en courant électrique desdites armatures métalliques allongées et du moule,

- un dispositif de sécurité préprogrammable destiné à limiter l'intensité du courant dans chacun desdits câbles électriques et relié

. d'une part, au disjoncteur de l'alimentation électrique des câbles électriques et,

. d'autre part, à un dispositif d'information sur l'intensité électrique traversant au moins un des câbles de l'alimentation en courant du béton humide,

ladite installation étant caractérisée en ce que son dispositif de sécurité est préprogrammé pour effectuer

- une disjonction momentanée de l'alimentation lorsque ladite intensité électrique atteint une première valeur prédéterminée en deçà de laquelle l'intensité est considérée comme normale et admissible en régime permanent

- et une disjonction définitive lorsque ladite intensité électrique dépasse une seconde valeur prédéterminée au-delà de laquelle l'installation est considérée comme le siège d'un court-circuit franc.

5. Installation de chauffage électrique du béton en cours de prise dans un moule selon la revendication 4, caractérisée en ce que son dispositif de sécurité

- comporte un circuit temporisateur de chauffe

. relié à au moins un relais à maximum d'intensité électrique mis en place sur au moins un dit câble électrique d'alimentation

. et préréglé de façon à émettre un premier signal en direction du circuit temporisateur lorsque ladite intensité électrique atteint ladite première valeur prédéterminée et un second signal en direction du circuit temporisateur lorsque ladite intensité électrique atteint ladite seconde valeur prédéterminée,

- ledit circuit temporisateur étant préprogrammé

. d'une part, pour déclencher la disjonction de l'alimentation lorsqu'il reçoit de la part dudit circuit à maximum d'intensité un dit premier signal et ramener ultérieurement le disjoncteur au bout d'un temps prédéterminé réglable à l'issue duquel la surintensité risque d'être suffisamment atténuée

. et, d'autre part, pour déclencher définitivement le disjoncteur de l'alimentation lorsqu'il reçoit, de la part dudit circuit à maximum d'intensité, un dit second signal.

6. Installation selon la revendication 5, caractérisée en ce que ledit circuit temporisateur est relié à un circuit de retard à la disjonction de façon que la coupure de ladite alimentation soit retardée lorsque l'intensité du courant dans certains dits câbles électriques dépasse sa dite première valeur sans dépasser la seconde.

7. Installation selon l'une des revendications 4 à 6 précédentes, caractérisée en ce que ladite commande de disjonteur comprend en outre un circuit de marche forcée, de sorte que l'opérateur puisse réenclencher l'alimentation générale lorsque celle-ci a été interrompue par ledit circuit temporisateur de chauffe ou directement par un dit relais à maximum d intensité.

8. Installation selon l'une des revendications 4 à 7 précédentes, caractérisée en ce que :

- d'une part, un sectionneur est intercalé sur certains desdits câbles électriques en aval de la prise de branchement dudit relais à maximum d'intensité correspondant,

- d'autre part, un circuit limiteur d'intensité est branché entre chaque borne dudit sectionneur.

9. Installation selon la revendication 8, caractérisée en ce que chaque dit circuit limiteur comporte un triac muni d'une plaquette électronique de pilotage reliée audit relais à maximum d'intensité, branchée en aval dudit sectionneur.

**Patentansprüche**

1. Verfahren, um ein im Abbinden begriffenes Betonelement in einer Form durch Joulsche Wärme zu erwärmen, indem man elektrischen Wechselstrom durch seine Masse fließen läßt, um seine Härtung zu beschleunigen, wobei der genannte Beton in seiner Masse zumindest eine, die Form in ihrer Länge durchquerende, verlängerte Armierung beinhält, wobei das genannte, zum Erwärmen des Betons bestimmte Verfahren darin besteht:.

- zumindest eine Armierung elektrisch von jeglichem anderen Element als Beton zu isolieren,

- zwischen jeder isolierten Armierung und einem anderen leitenden, mit dem Beton in Berührung stehenden Metallelement direkt eine Potentialdifferenz zu schaffen in der Weise, daß man zwischen diesem Element und dieser isolierten Armierung elektrischen Strom durch den feuchten Beton fließen läßt mittels eines Spannungsgenerators,

- und die genannte Potentialdifferenz solange aufrechtzuerhalten als der so erwärmte Beton eine zum Entformen ausreichende Festigkeit nicht erreicht hat,

wobei das genannte Verfahren dadurch gekennzeichnet ist, daß:

- das andere Metallelement von der Form gebildet wird,

- eine elektrische Verbindung in mehreren Zonen der genannten, zumindest einen isolierten Armierung hergestellt wird, wobei jede dieser Zonen direkt mit derselben Klemme des Generators verbunden ist und

- die genannten Verbindungszonen über die Länge dieser isolierten Armierung verteilt werden in der Weise, daß die Stromstärke auf jede Abzweigung verteilt wird.

2. Verfahren gemäß Anspruch 1, dadurch gekennzeichnet, daß

- vor dem Formen in jeder von zumindest einigen der elektrischen Verbindungszonen ein leitendes Metallteil quer zur entsprechenden Armierung angeordnet wird, sodaß jeder dieser Teile nach dem Formen aus dem Beton herausragt;

- die elektrische Verbindung jedes dieser Teile

° einerseits mit der entsprechenden Armierung

° und andererseits, in Richtung des aus dem Beton ragenden Endes, mit der entsprechenden Klemme des Spannungsgenerators hergestellt wird;

- und schließlich dieser Teil zum Zeitpunkt des Entformens in gleicher Höhe mit dem Beton abgetrennt wird:

3. Verfahren gemäß einem der Ansprüche 1 und 2, wobei das genannte Verfahren angewandt wird

- für die End-zu-End-Herstellung länglicher Elemente aus geformtem Beton, welche der Länge nach von zumindest einer Armierung durchquert werden, in einer Produktionsanlage für vorgespannte kalken, umfassend eine schlanke und große Metallform, an deren Enden und entlang derer die gesamten Spannbewehrungen gespannt sind und in welcher gleichzeitig mehrere kalken End-zu-End geformt werden, wobei der Zwischenraum zwischen zwei nebeneinanderliegenden Balken durch zwei quer zur Form angeordnete Blenden gebildet wird, durch welche die gesamten Spannbewehrungen laufen und zwischen welche kein Beton gegossen wird,

wobei das genannte Verfahren dadurch gekennzeichnet ist, daß

- zumindest eine von den gesamten Spannbewehrungen elektrisch isoliert wird,

- jede elektrische Verbindung in jeder der isolierten Zonen zwischen zwei genannten Blenden angeordnet wird, wobei der Zwischenraum zwischen zwei Blenden, in welchem die Verbindung angeordnet wird, eine sogenannte Verbindungszone bildet;

- diese Verbindung quer zu den Armierungen aus der Form genommen wird.

4. Anlage zur elektrischen Erwärmung des in einer Form in Abbindung begriffenen Betons, um das Verfahren aus einem der Ansprüche 1 - 3 einzusetzen, wobei diese Anlage umfaßt:

- eine allgemeine Netzstromversorgung beinhaltend einen Überlastschalter und seine Steuerung,

- einen Stromtransformator, dessen Primärseite mit der genannten allgemeinen Versorgung verbunden ist,

- einen Satz Anschlußkabel, welche mit der Sekundärseite des genannten Transformators verbunden und zur Versorgung der genannten verlängerten Metallarmierungen und der Form mit elektrischem Strom bestimmt sind,

- eine vorprogrammierbare Sicherheitsvorrichtung zur Begrenzung der Stromstärke in jedem der genannten Anschlußkabel und verbunden

- einerseits mit dem Überlastschalter der elektrischen Versorgung der Anschlußkabel und

- andererseits mit einer Informationsvorrichtung über die zumindest eines der Kabel der Stromversorgung des feuchten Betons durchlaufenden Stromstärke,

wobei die genannte Anlage dadurch gekennzeichnet ist, daß ihre Sicherheitsvorrichtung vorprogrammiert ist, um

- eine Augenblicksabschaltung der Versorgung zu bewirken, wenn die genannte Stromstärke einen ersten vorbestimmten Wert erreicht, diesseits welchen die Stromstärke als normal und im Dauerbetrieb zulässig angesehen wird

- und eine endgültige Abschaltung, wenn die genannte Stromstärke einen zweiten vorbestimmten Wert überschreitet, jenseits welchen die Anlage als Sitz eines reinen Kurzschlusses angesehen wird.

5. Anlage zur elektrischen Erwärmung des in einer Form in Abbindung begriffenen Betons gemäß Anspruch 4, dadurch gekennzeichnet, daß ihre Sicherheitsvorrichtung

- einen Verzögerungsheizkreis umfaßt,

° welcher mit zumindest einem auf zumindest einem genannten Anschlußkabel installierten elektrischen Überstromrelais verbunden ist

° und derart voreingestellt wird, daß ein erstes Signal in Richtung Verzögerungskreis abgegeben wird, wenn die genannte Stromstärke den genannten vorbestimmten ersten Wert erreicht und ein zweites Signal in Richtung Verzögerungskreis, wenn die genannte Stromstärke den genannten vorbestimmten zweiten Wert erreicht,

- wobei der genannte Verzögerungskreis vorprogrammiert ist,

- um einerseits die Abschaltung der Versorgung auszulösen, wenn er vom genannten Überstromkreis ein erstes Signal erhält und nachher den Überlastschalter am Ende einer einstellbaren, vorbestimmten Zeit zurückzustellen, nach Ablauf welcher der Überstrom genügend gedämpft sein könnte und

- um andererseits den Überlastschalter der Versorgung endgültig auszulösen, wenn er vom genannten Überstromkreis ein genanntes zweites Signal erhält.

6. Anlage gemäß Anspruch 5, dadurch gekennzeichnet, daß der genannte Verzögerungskreis mit einem abschaltverzögerten Kreis verbunden ist, sodaß die Unterbrechung der genannten Versorgung verzögert wird, wenn die Stromstärke in einigen genannten Anschlußkabeln ihren genannten ersten Wert überschreitet ohne den zweiten zu überschreiten.

7. Anlage gemäß einem der vorhergehenden Ansprüche 4 - 6, dadurch gekennzeichnet, daß die genannte Überlastschaltersteuerung außerdem einen Zwangsbetriebskreis umfaßt, sodaß der Bedienungsmann die allgemeine Versorgung wieder einschalten kann, wenn diese von dem genannten Verzögerungsheizkreis unterbrochen worden ist oder direkt durch ein genanntes Überstromrelais.

8. Anlage gemäß einem der vorhergehenden Ansprüche 4 - 7, dadurch gekennzeichnet, daß
- einerseits ein Trennschalter unterhalb der Anschlußstelle des genannten entsprechenden Überstromrelais auf einigen der genannten Anschlußkabel dazwischengeschaltet ist,
- andererseits ein Strombegrenzungskreis zwischen jeder Klemme des genannten Trennschalters angeschlossen ist.

9. Anlage gemäß Anspruch 8, dadurch gekennzeichnet, daß jeder genannte Begrenzungskreis ein Triac umfaßt, welches mit einer elektronischen, mit dem genannten Überstromrelais verbundenen Steuerungsplatte ausgerüstet ist, welche unterhalb des genannten Trennschalters angeschlossen ist.

**Claims**

1. A process for heating a concrete element in the course of setting in a mould, by the Joule effect, by causing an alternating electric current to circulate in its mass with a view to accelerating its hardening, the said concrete comprising, in its mass, at least one elongated reinforcement passing through the mould lengthwise, the said process adapted to heat the concrete, consisting:
- in electrically insulating at least one reinforcement from every element other than the concrete,
- in directly establishing a potential difference between each insulated reinforcement and another metallic conducting element in contact with the concrete in such a manner as to cause an electric current to circulate between said element and said insulated reinforcement, through the moist concrete by means of a voltage generator,
- and in maintaining the said potential difference as long as the concrete thus heated has not reached a sufficient strength for demoulding,
   the said process being characterised in that:
- the other metallic element consists of the mould;
- an electrical connection is made at a plurality of regions of the said at least one insulated reinforcement, each of these regions being directly connected to one and the same terminal of the generator; and
- the said connection regions are distributed over the length of this insulated reinforcement in such a manner as to distribute the intensity of the current in each of the branch circuits.

2. A process according to Claim 1, characterised in that:
- before casting, a metallic conducting member is disposed in each of at least some of the electrical connection regions, transversely to the corresponding reinforcement, in such a manner that each of these members extends beyond the concrete after casting;
- the electrical connection of each of these members is effected
   ...on the one hand to the corresponding reinforcement
   ...and on the other hand, towards the end extending beyond the concrete, to the corresponnding terminal of the voltage generator;
- and finally, this member is parted off level with the concrete at the moment of demoulding.

3. A process according to one of the Claims 1 and 2, said process being applied
- to the construction, end to end, of oblong elements of cast concrete traversed longitudinally by at least one reinforcement on a bench for the manufacture of prestressed beams comprising a long metallic mould at the ends and along which are stretched all the simultaneously end to end, the gap between two juxtaposed beams being formed by two diaphragms transverse to the mould which are traversed by all the prestressing reinforcements and between which no concrete is cast,
   the said process being characterised in that:
- at least one of all the prestressing reinforcements is electrically insulated:
- each electrical connection is disposed in each of the insulated regions between two said diaphragms, the gap between two diaphragms in which the connection is made thus constituting one said connection region;
- and this connection is withdrawn from the mould transversely to the reinforcements.

4. An installation for the electrical heating of concrete in the course of setting in a mould, for carrying out the process of one of the Claims 1 to 3,
   this installation comprising:
- a common mains power supply comprising a circuit-breaker and its control,
- a current transformer, the primary of which is connected to said common supply,
- an assembly of electric cables connected to the secondary of the said transformer and adapted to feed said elongated metallic reinforcements and the mould with electric current,

- a safety device which can be preprogrammed and is adapted to limit the strength of the current in each of said electric cables and connected

. on the one hand to the circuit-breaker of the electricity supply of the electric cables and

. on the other hand to a device for information about the strength of the electric current traversing at least one of the cables for supplying the moist concrete with current, said installation being charateised in that its safety device can be preprogrammed to effect

- a temporary disconnection of the supply when the said strength of the electric current reaches a first predetermined value below which the strength is regarded as normal and admissible during continuous duty

- and a permanent disconnection when the said strength of the electric current exceeds a second predetermined value beyond which the installation is regarded as the seat of a real short-circuit.

5. An installation for the electrical heating of concrete in the course of setting in a mould according to Claim 4, characterised in that its safety device

- comprises a delayed-action heating circuit

. connected to at least one maximum current strength relay placed in position on at least one of said electric supply cables

. and present in such a manner as to transmit a first signal in the direction of the delayed-action circuit when said current strength reaches the said first predetermined value and a second signal in the direction of the delayed-action circuit when the said current strength reaches said second predetermined value,

- the said delayed-action circuit being preprogrammed

. on the one hand to trigger the disconnection of the supply when it receives a said first signal from said maximum strength circuit and subsequently to restore the circuit-breaker at the end of an adjustable predetermined time at the end of which the excess current risks being sufficiently attenuated

. and on the other hand to trigger the supply circuit-breaker premanently when it receives a said second signal from the said maximum strength circuit.

6. An installation according to Claim 5, characterised in that the said delayed-action circuit is connected to a disconnection delay circuit in such a manner that the cutting of the said supply is delayed when the strength of the current in certain said electric cables exceeds its said first value without exceeding the second.

7. An installation according to one of the Claims 4 to 6 above, characterised in that the said circuit-breaker control further comprises an overriding circuit so that the operator can re-connect the common supply when this has been interruped by the said delayed-action heating circuit or directly by a said maximum strength relay.

8. An installation according to one of the Claims 4 to 7 above, characterised in that:

- on the one hand an isolating switch is interposed in some of said electric cables downstream of the branching point of said corresponding maximum strength relay

- on the other hand a current limiting circuit is connected between each terminal of said isolating switch.

9. An installation according to Claim 6, characterised in that each said current limiting circuit comprises a triac equipped with an electronic control board connected to said maximum strength relay, connected downstream of said isolating switch.

Fig.1

Fig. 2

Fig. 7

Fig. 3

Fig.6

Fig.4

Fig.5

0 000 298

Fig. 8